# EUROPÄISCHE PATENTANMELDUNG

(11) **EP 4 600 204 A1**
(43) Veröffentlichungstag der Anmeldung: **13.08.2025**
(21) Anmeldenummer: 24156538.1
(22) Anmeldetag: 08.02.2024
(51) Int. Cl.: C01B 3/04, B01J 8/02

(54) **VORRICHTUNG UND VERFAHREN ZUM VERDAMPFEN VON AMMONIAK**

(71) Anmelder: WS-Wärmeprozesstechnik GmbH, 71272 Renningen (DE)
(72) Erfinder: Wünning, Joachim A., 71229 Leonberg (DE); Wünning, Joachim G., 71229 Leonberg (DE)
(74) Vertreter: Patentanwälte Ruff, Wilhelm, Beier, Dauster & Partner mbB

(57) **Zusammenfassung**

Die Erfindung betrifft eine Vorrichtung und ein Verfahren zum Verdampfen von Ammoniak und zur partiellen Umwandlung von Ammoniak in ein Gasgemisch mit einem Ammoniak-Anteil, wobei in einem Reaktor (3) Ammoniak (1) zumindest teilweise in Wasserstoff und Stickstoff zur Erzeugung des Gasgemischs (2) aufgespalten wird, wobei ein als Ausgangsstoff flüssig zugeführtes Ammoniak (1) stromaufwärts des Reaktors (3) über einen ersten Einlass (51) einem Verdampfer (5) für eine Verdampfung zugeführt und verdampftes Ammoniak (1) aus dem Verdampfer (5) über einen ersten Auslass (52) abgeführt wird, wobei über den ersten Auslass des Verdampfers (5) abgeführtes verdampftes Ammoniak (1) dem Reaktor (3) zugeführt wird, wobei dem Reaktor (3) indirekt Wärme über eine Trennwand (33) zu einer Brennkammer (40) eines Brenners (4) zugeführt wird, um das Ammoniak (1) in dem Reaktor (3) mittels des Brenners (4) indirekt zu erwärmen, und wobei ein über einen Auslass (32) des Reaktors (3) abgeführtes Gasgemisch (2) einem zweiten Einlass (53) des Verdampfers (5) zugeführt wird, um das flüssig zugeführte Ammoniak (1) mittels des aus dem Reaktor (3) abströmenden Gasgemischs (2) indirekt für die Verdampfung zu erwärmen.

## Beschreibung

### ANWENDUNGSGEBIET UND STAND DER TECHNIK

Die Erfindung betrifft eine Vorrichtung und ein Verfahren zum Verdampfen von Ammoniak und zur partiellen Umwandlung von Ammoniak in ein Gasgemisch.

Ammoniak wird heute in großen Mengen für die Produktion von Düngemitteln oder in der Kältetechnik verwendet. Dafür muss ein üblicherweise flüssig in Tanks angeliefertes Ammoniak verdampft werden.

Zum Zeitpunkt der Anmeldung zeichnet sich eine weitere Verwendung von Ammoniak ab, nämlich eine Verwendung als Energieträger von grünem Wasserstoff. Erzeugung und Verbrauch des grünen Wasserstoffs, durch welchen fossilen Energieträger ersetzt werden sollen, erfolgen in der Regel sowohl örtlich als auch räumlich getrennt. Da eine Handhabung, ein Transport und eine Speicherung von Ammoniak, bestehend aus Wasserstoff und Stickstoff, deutlich einfacher ist als ein Umgang mit Wasserstoff, wird Ammoniak zunehmend auch als kohlenstofffreier Energieträger für einen Transport von grünem Wasserstoff eingesetzt. Ammoniak kann zu diesem Zweck kostengünstig über große Entfernungen per Schiff oder Pipeline flüssig transportiert werden.

Aufgrund einer schlechten Zündfähigkeit kann Ammoniak jedoch nicht direkt als Brennstoff für Wärmeprozesse, Motoren, Gasturbinen oder andere Verbraucher verwendet werden. Für eine Verwendung ist daher eine Rückumwandlung des Ammoniaks in Wasserstoff bekannt.

Für die Rückumwandlung in Wasserstoff sind Reaktoren zur Spaltung von Ammoniak (üblicherweise als Ammoniak-Cracker bezeichnet) bekannt, in welchen Ammoniak bei ca. 850°C in 75% H2 und 25% N2 aufgespalten wird. Die Reaktoren verwenden dafür beispielsweise einen Katalysator.

In der Regel ist ein energetischer Aufwand für eine vollständige Umwandlung des Ammoniaks in Wasserstoff und Stickstoff für eine Verwendung des so erhaltenen Wasserstoffs als Brennstoff zu hoch. Es ist daher alternativ eine partielle Umwandlung von Ammoniak in ein brennbares, wasserstoffhaltiges Gasgemisch mit einem Ammoniak-Anteil bekannt.

Aus CN 217458828 U ist ein System bekannt, bei welchem Ammoniak mit einem geringen energetischen Aufwand in Wasserstoff umgewandelt werden soll. Das System umfasst einen Reaktor zur Umwandlung von Ammoniak in Wasserstoff, einen stromaufwärts des Reaktors angeordneten Verdampfer, in welchem flüssig zugeführter Ammoniak stromaufwärts des Reaktors verdampft wird, und einen Brenner mit einer Brennkammer, wobei der Brennkammer ein Teil des von dem Reaktor abgeführten gasförmigen Wasserstoffs zugeführt wird. Ein Erwärmen des Reaktors und des Verdampfers erfolgt durch das von der Brennkammer abgeführtes Abgas.

### AUFGABE UND LÖSUNG

Es ist eine Aufgabe der Erfindung, eine kompakte Vorrichtung und ein Verfahren zur Verdampfung von Ammoniak und zur partiellen Umwandlung von Ammoniak in ein brennbares, wasserstoffhaltiges Gasgemisch, welches als Brennstoff zur Wärmeerzeugung oder in einer Wärme-Kraft-Maschine genutzt werden kann, zu schaffen, welche einen hohen Wirkungsgrad aufweisen.

Gemäß einem ersten Aspekt wird eine Vorrichtung zur Verdampfung von Ammoniak und partiellen Umwandlung von Ammoniak in ein brennbares, wasserstoffhaltiges Gasgemisch mit einem Ammoniak-Anteil geschaffen, umfassend einen Reaktor, einen Brenner mit einer Brennkammer und einen Verdampfer, wobei der Reaktor eingerichtet ist, um Ammoniak zumindest teilweise in Wasserstoff und Stickstoff zur Erzeugung des Gasgemischs aufzuspalten, wobei ein als Ausgangsstoff flüssig bereitgestelltes Ammoniak über einen ersten Einlass dem Verdampfer für eine Verdampfung zuführbar ist und in dem Verdampfer verdampftes Ammoniak an einem ersten Auslass des Verdampfers gasförmig abführbar ist, wobei der Reaktor einen mit einem ersten Auslass des Verdampfers verbundenen Einlass, einen Auslass für das Gasgemisch und eine Trennwand zu der Brennkammer, um das Ammoniak in dem Reaktor mittels des Brenners indirekt zu erwärmen, aufweist, und wobei der Auslass des Reaktors mit einem zweiten Einlass des Verdampfers verbunden ist, um das flüssig zugeführte Ammoniak mittels des aus dem Reaktor abströmenden Gasgemischs indirekt für die Verdampfung zu erwärmen.

Gemäß einem zweiten Aspekt wird ein Verfahren zur Verdampfung von Ammoniak und zur partiellen Umwandlung von Ammoniak mittels eines Reaktors in ein brennbares, wasserstoffhaltiges Gasgemisch mit einem Ammoniak-Anteil, wobei in dem Reaktor Ammoniak zumindest teilweise in Wasserstoff und Stickstoff zur Erzeugung des Gasgemischs aufgespalten wird, wobei ein als Ausgangsstoff flüssig bereitgestelltes Ammoniak über einen ersten Einlass einem Verdampfer für eine Verdampfung zugeführt und verdampftes Ammoniak aus dem Verdampfer über einen ersten Auslass abgeführt wird, wobei über den ersten Auslass des Verdampfers abgeführtes verdampftes Ammoniak dem Reaktor zugeführt wird, wobei dem Reaktor indirekt Wärme über eine Trennwand zu einer Brennkammer eines Brenners zugeführt wird, um das Ammoniak in dem Reaktor mittels des Brenners indirekt zu erwärmen, und wobei ein über einen Auslass des Reaktors abgeführtes Gasgemisch einem zweiten Einlass des Verdampfers zugeführt wird, um das flüssig zugeführte Ammoniak mittels des aus dem Reaktor abströmenden Gasgemischs indirekt für die Verdampfung zu erwärmen.

Ein bei einer Verbrennung erzeugtes heißes Abgas dient als Energiequelle für eine indirekte Erwärmung des Reaktors. Die thermische Energie des in dem Reaktor erzeugten Gasgemischs wird für eine Verdampfung des flüssig bereitgestellten Ammoniaks genutzt. Durch die Nutzung der thermischen Energie des erzeugten Gasgemischs für die Verdampfung und die Zufuhr des verdampften Ammoniaks zu dem Reaktor bleibt die für die Verdampfung zugeführte thermische Energie für die nachfolgende partielle Umwandlung des Ammoniaks nahezu erhalten.

Die Vorrichtung und das Verfahren erlauben es, mit einem geringen energetischen Mehraufwand gegenüber einem isoliert eingesetzten Verdampfer gleichzeitig ein zündfähiges Gasgemisch zu erzeugen.

Das erzeugte Gasgemisch, auch als Spaltgas bezeichnet, kann beispielsweise für die Beheizung von Wärmprozessen oder für den Betrieb von Motoren eingesetzt werden.

Bei dem Reaktor handelt es sich in Ausgestaltungen um einen katalytischen Reaktor, beispielsweise um einen Reaktor mit einem Nickel-basierten Katalysator.

Als "indirekte Erwärmung" oder "indirekte Beheizung" ist, wird im Zusammenhang mit der Anmeldung eine Zufuhr thermischer Energie bei einer stofflichen Trennung bezeichnet. Insbesondere werden Verbrennungsprodukte des Brenners nicht dem Reaktor zugeführt, sondern lediglich deren thermische Energie für ein Erwärmen des Reaktors genutzt.

Die Begriffe "erste", "erster", etc. sowie "zweite", "zweiter", "dritte" etc. dienen im Zusammenhang mit der Anmeldung lediglich zur Unterscheidung unterschiedlicher Bauteile und sollen keine Reihenfolge angeben. Ebenso verlangt die Verwendung des Begriffs "erste" etc. nicht das Vorhandensein eines separaten zweiten Bauteils.

In Ausgestaltungen der Vorrichtung ist die Trennwand rohrförmig, wobei eine Reaktorkammer des Reaktors um die rohrförmige Trennwand angeordnet ist. Die Trennwand ist dabei in Ausgestaltungen insbesondere als Kreiszylinder gestaltet. Die Trennwand begrenzt in Ausgestaltungen die Brennkammer. Dabei ist in Ausgestaltungen in der Brennkammer ein Flammrohr des Brenners angeordnet, wobei Abgase in einem zwischen dem Flammrohr und der Trennwand gebildeten Spalt aus der Brennkammer abgeführt werden und ein Teil der Abgase rezirkuliert wird.

Der Verdampfer weist in Ausgestaltungen einen den Reaktor umgebenden Ringkanal und eine in dem Ringkanal angeordnete Rohrwendel auf, wobei flüssiges Ammoniak über den ersten Einlass der Rohrwendel für die Verdampfung zuführbar ist. Das aus dem Reaktor abströmende Gasgemisch wird durch den Ringkanal geführt, sodass das flüssige Ammoniak in der Rohrwendel mittels des Gasgemischs erwärmt und verdampft wird. In Ausgestaltungen ist zwischen dem Reaktor und dem Ringkanal eine Isolierung vorgesehen, wobei die Isolierung so bemessen ist, dass ein verbleibender Wandverlust für die Verdampfung des Ammoniaks in der Rohrwendel nutzbar ist. Die Isolierung dient dazu, Wärmeverluste des Reaktors möglichst klein zu halten. Da ein verbleibender Wandverlust für die Verdampfung des Ammoniaks nutzbar ist, und der verdampfte Ammoniak wieder dem Reaktor zugeführt wird, kann ein Wärmeverlust weiter verringert werden.

In Ausgestaltungen ist im Bereich des Auslasses des Reaktors ein Sensoreinrichtung zur Erfassung einer Temperatur vorgesehen, wobei die Vorrichtung Stelleinrichtungen umfasst, um die Temperatur am Auslass des Reaktors durch Variation einer dem Reaktor zugeführten thermischen Energie auf ein Bereich von ca. 500°C bis 800°C zu regeln. Durch Regeln der Temperatur am Auslass des Reaktors kann ein Spaltgrad des Ammoniaks geregelt werden. Die Temperatur am Auslass des Reaktors ist durch Variation der dem Reaktor zugeführten thermischen Energie regelbar.

Die Zufuhr der thermischen Energie erfolgt über die Trennwand, welche durch den Brenner beheizbar ist.

In Ausgestaltungen weist der Brenner eine Gaszufuhr auf, wobei mittels der Gaszufuhr dem Brenner wahlweise das aus dem Verdampfer abströmende Gasgemisch und/oder ein alternatives brennbares Gas und/oder Gasgemisch zuführbar ist. Durch Zuführung eines Teils des in dem Reaktor erzeugten Gasgemischs zu dem Brenner ist ein autarker Betrieb der Vorrichtung möglich. Je nach Ausgestaltung und Spaltgrad, d.h. Anteil des Wasserstoffs in dem erzeugten Gasgemisch, werden dabei für einen autarken Betrieb ca.10 % des erzeugten Gasgemischs dem Brenner zugeführt. Bei dem alternativ zugeführten brennbaren Gas und/oder Gasgemisch handelt es sich in Ausgestaltungen um ein sogenanntes Abfallgas, welches beispielsweise in einer Produktion anfällt, ein Deponiegas, ein Klärgas und/oder ein Biogas. Das Gas wird je nach Ausgestaltung aufbereitet, um bestimmte Bestandteile zu entfernen. Das alternativ zugeführte brennbare Gas oder Gasgemisch wird in Ausgestaltungen beim Anfahren der Vorrichtung und/oder in Zeiten, in welchen ein Abfallgas oder ein anderes Gas in Überschuss vorhanden ist, genutzt.

Alternativ oder zusätzlich ist in Ausgestaltungen eine elektrische Heizeinrichtung, insbesondere eine in der Brennkammer angeordnete Heizspirale für eine Erwärmung des Reaktors vorgesehen. Die elektrische Heizeinrichtung ist dabei alternativ oder zusätzlich beim Anfahren der Vorrichtung und/oder in Zeiten, in welchen ein Strom in Überschuss vorhanden ist, genutzt.

Der Brenner ist in Ausgestaltungen in einem Verfahren für eine flammenlose Oxidation betreibbar, um eine Bildung von Stickoxiden (NOx) zu vermeiden oder zumindest auf ein tolerierbares Maß zu reduzieren. Der Brenner ist zu diesem Zweck in Ausgestaltungen derart gestaltet, dass ein zugeführtes Gas-Luft-Gemisch an einer Austrittsöffnung in die Brennkammer eine Geschwindigkeit annimmt, die ausreicht, um eine etwaige Flamme wegzublasen. Durch die Geschwindigkeit kann je nach Bauart zudem eine hohe Rezirkulation eines Abgases bewirkt werden. Ein entsprechender Betrieb eines Brenners wird auch als Flox^{®} -Betrieb bezeichnet (Flox ist eine eingetragene Marke der WS-Wärmeprozesstechnik GmbH). Entsprechend betreibbare Brenner haben je nach Auslegung einen Wirkungsgrad bis zu 85%.

Für einen Betrieb mit einem hohen Wirkungsgrad weist der Brenner in Ausgestaltungen einen Wärmetauscher für eine indirekte Erwärmung einer zugeführten Luft mittels Abgas auf, vorzugsweise einen Flachrohr-Wärmetauscher.

In einer Ausgestaltung ist ein Verdichter zum Verdichten des flüssig bereitgestellten Ammoniaks stromaufwärts des Verdampfers vorgesehen, sodass das Gasgemisch mit Überdruck erzeugbar ist. Das erzeugte Gasgemisch ist so unmittelbar in entsprechenden Motoren nutzbar. Die Vorrichtung ist zu diesem Zweck geeignet gestaltet, um einen Überdruckbetrieb zu ermöglichen.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgenden anhand der Figuren erläutert sind. Dabei zeigen:
- Fig. 1: ein verfahrenstechnisches Fließbild eines Verfahrens zur partiellen Umwandlung von Ammoniak in ein brennbares, wasserstoffhaltiges Gasgemisch; und
- Fig. 2: eine schematische Darstellung eines Ausführungsbeispiels einer Vorrichtung zur Verdampfung und partiellen Umwandlung von Ammoniak in ein brennbares, wasserstoffhaltiges Gasgemisch.

### DETAILLIERTE BESCHREIBUNG DER AUSFÜHRUNGSBEISPIELE

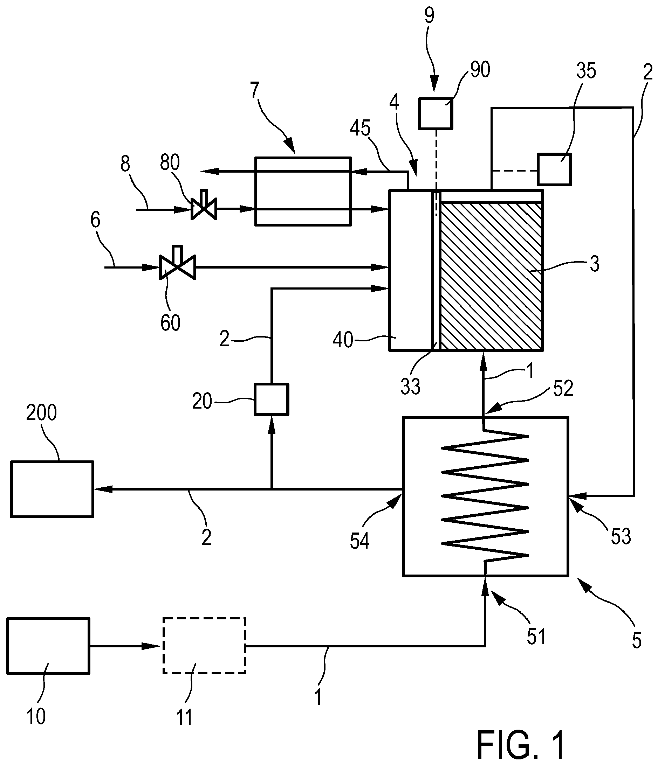

Fig. 1 zeigt ein verfahrenstechnisches Fließbild eines Verfahrens zur Verdampfung eines als Ausgangsstoffs flüssig bereitgestellten Ammoniak 1 und zur partiellen Umwandlung des verdampften Ammoniak 1 in ein brennbares, wasserstoffhaltiges Gasgemisch 2. Das Gasgemisch 2 dient beispielsweise als Brennstoff in einem schematisch dargestellten Verbraucher 200, beispielsweise einer Heizung oder einem Motor, beispielsweise auf einem Schiff.

Das beispielsweise in einem Tank 10 flüssig bereitgestellte Ammoniak 1 wird zunächst in einem Verdampfer 5 verdampft und das verdampfte, gasförmige Ammoniak 1 in einem Reaktor 3 bei einer Reaktionstemperatur von ca. 500°C bis ca. 800°C teilweise in Wasserstoff und Stickstoff zur Erzeugung des Gasgemischs 2 mit einem verbleibenden Ammoniak-Anteil aufgespalten.

Die für die partielle Umwandlung des Ammoniaks 1 benötigte Wärme wird mittels eines Brenners 4 mit einer Brennkammer 40 erzeugt, wobei der Reaktor 3 eine Trennwand 33 zu der Brennkammer 40 aufweist, um das Ammoniak 1 in dem Reaktor 3 mittels des Brenners 4 indirekt zu erwärmen.

Eine thermische Energie des in dem Reaktor 3 erzeugten Gasgemischs 2 wird genutzt, um das flüssige Ammoniak 1 in dem Verdampfer 5 zu verdampfen. Der Verdampfer 5 weist einen ersten Einlass 51 und einen ersten Auslass 52 auf, wobei über den ersten Einlass 51 dem Verdampfer das flüssige Ammoniak 1 für eine Verdampfung zuführbar ist und in dem Verdampfer 5 verdampftes Ammoniak an dem ersten Auslass 52 des Verdampfers 5 gasförmig abführbar ist. Für die stofflich getrennte indirekte Erwärmung weist der Verdampfer 5 zudem einen zweiten Einlass 53 und einen zweiten Auslass 54 auf, wobei das von dem Reaktor 3 abgeführte heiße Gasgemisch 2 über den zweiten Einlass 53 dem Verdampfer zuführbar und an dem zweiten Auslass 54 des Verdampfers 5 abführbar ist.

Ein Teil des an dem zweiten Auslass 54 abgeführten Gasgemischs 2 kann mittels einer Pumpe 20 dem Brenner 4 zugeführt werden. Alternativ oder zusätzlich kann dem Brenner 4 ein alternatives brennbares Gas 6 zugeführt werden. Ein heißes Abgas 45 der Brennkammer 4 wird einem Wärmetauscher 7 für eine Erwärmung einer dem Brenner 4 zugeführten Verbrennungsluft 8 zugeführt.

Die notwendige Energie für die Spaltung des Ammoniaks in dem Reaktor 3 wird durch indirekte Beheizung des Reaktors 3 mittels des Brenners 4 erzielt. Alternativ ist in dem schematisch dargestellten Ausführungsbeispiel eine elektrische Heizeinrichtung 9 vorgesehen.

An einem Auslass des Reaktors 3 ist eine Sensoreinrichtung 35 vorgesehen. Die Vorrichtung 1 umfasst mehrere Stelleinrichtungen 20, 60, 80, 90, für eine Variation einer dem Reaktor 3 zugeführten thermischen Energie, um die mittels der Sensoreinrichtung 35 erfasste Temperatur durch Variation einer dem Reaktor 3 zugeführten thermischen Energie auf ein Bereich von ca. 500°C bis 800°C zu regeln. Durch Regelung der Temperatur ist dabei ein Spaltgrad des Reaktors 3, d.h. ein verbleibender Ammoniak-Anteil in dem erzeugten Gasgemisch 2, einstellbar.

In einer Zufuhr des flüssigen Ammoniaks 1 zu dem Verdampfer 5 ist in Ausgestaltungen ein schematisch dargestellter Verdichter 11 vorgesehen, mittels welchem das Ammoniak 1 verdichtet werden kann, sodass ein Gasgemisch 2 mit einem Überdruck erzeugt wird.

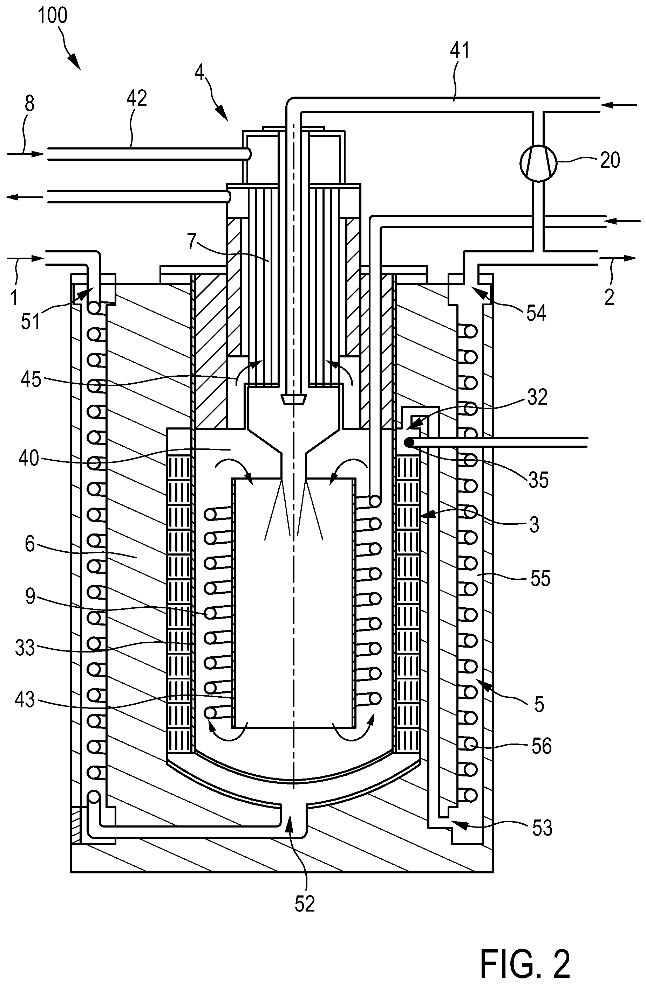

Fig. 2 zeigt eine schematische Darstellung eines Ausführungsbeispiels einer Vorrichtung 100 zur Verdampfung und partiellen Umwandlung von Ammoniak 1 in ein brennbares, wasserstoffhaltiges Gasgemisch 2 mit einem Ammoniak-Anteil. Die Vorrichtung 10 umfasst einen Verdampfer 5, einen Brenner 4 mit einer Brennkammer 40 und einen Reaktor 3. Der Reaktor 3 ist beispielsweise mit einem Katalysator befüllt, um Ammoniak 1 bei einer definierten Temperatur zumindest teilweise in Wasserstoff und Stickstoff zur Erzeugung des Gasgemischs 2 aufzuspalten.

Der Reaktor 3 weist eine in dem dargestellten Ausführungsbeispiel rohrförmige Trennwand 33 zu der Brennkammer 40 auf, sodass das Ammoniak 1 in dem Reaktor 3 mittels des Brenners 4 indirekt für eine zumindest partielle Spaltung erwärmbar ist.

Der Verdampfer 5 weist einen ersten Einlass 51, einen ersten Auslass 52, einen zweiten Einlass 53 und einen zweiten Auslass 54 auf.

In dem dargestellten Ausführungsbeispiel weist der Verdampfer 5 einen den Reaktor 3 umgebenden Ringkanal 55 und eine in dem Ringkanal 55 angeordnete Rohrwendel 56 auf. Das als Ausgangsstoff flüssig bereitgestellte Ammoniak 1 ist über den ersten Einlass 51 der Rohrwendel 56 für die Verdampfung zuführbar. In dem Verdampfer 5 verdampftes Ammoniak 1 ist an dem ersten Auslass 52 des Verdampfers 5 gasförmig abführbar. Der erste Auslass 52 des Verdampfers 52 ist mit einem Einlass 31 des Reaktors 3 verbunden, sodass das von dem Verdampfer 5 abgeführte Ammoniak 1 dem Reaktor 3 zuführbar ist.

Ein Auslass 32 des Reaktors 3 ist mit dem zweiten Einlass 53 des Verdampfers 5 verbunden, um das flüssig zugeführte Ammoniak 1 mittels des aus dem Reaktor 3 abströmenden Gasgemischs 2 indirekt für die Verdampfung zu erwärmen.

Zwischen dem Reaktor 3 und dem Ringkanal 55 ist eine Isolierung 6 vorgesehen. Die Isolierung 6 ist so bemessen, dass ein verbleibender Wandverlust für die Verdampfung des Ammoniaks 1 in der Rohrwendel 56 nutzbar ist.

Das erzeugte Gasgemisch 2 ist zumindest teilweise mittels einer Pumpe 20 einer Gaszufuhr 41 zu dem Brenner 4 zuführbar. Für einen autarken Betrieb der Vorrichtung 100 werden ca. 10 % des erzeugten Gasgemischs 2 dem Brenner 4 zugeführt. Der verbleibende Anteil des erzeugten Gasgemischs 2 ist durch einen alternativen Verbraucher nutzbar.

Eine Luft 8 für die Verbrennung ist über eine Luft-Zuleitung zuführbar.

Der dargestellte Brenner 4 umfasst ein Flammrohr 43. Ein aus dem Flammrohr 43 austretendes Abgas überstömt die Trennwand 33 für eine indirekte Erwärmung des Reaktors 3. Der Brenner 4 ist für einen flammenlose Oxidation betreibbar. Das aus dem Flammrohr 43 abströmende Abgas wird dabei zumindest teilweise rezirkuliert. Das nicht rezirkulierte Abgas 45 wird einem Wärmetauscher 7 zugeführt und zur Erwärmung der dem Brenner 4 zugeführten Luft 8 genutzt.

Der Wärmetauscher 7 ist in Ausgestaltungen ein Flachrohr-Wärmetauscher mit einem hohen Wirkungsgrad.

Für einen Warmlauf der Vorrichtung 100 und/oder sofern ein alternatives brennbares Gas 6, beispielsweise ein Abfallgas, in Überschuss vorhanden ist, kann das alternative brennbare Gas 6 an der Gaszufuhr 41 dem Brenner 4 zugeführt werden.

Die dargestellte Vorrichtung 100 umfasst weiter eine elektrische Heizeinrichtung 9 für eine Erwärmung des Reaktors 3, insbesondere eine Erwärmung der Trennwand 33 von einer Außenseite des Reaktors 3. Die dargestellte Heizeinrichtung 9 ist als eine in der Brennkammer 40 angeordnete Heizspirale 3 gestaltet.

Eine Erwärmung des Reaktors 3 für die zumindest partielle Spaltung des zugeführten Ammoniaks 1 ist dabei wahlweise mittels des erzeugten Gasgemischs 6, mittels eines alternativen Gases 6 und/oder elektrisch möglich.

An dem Auslass 32 des Reaktors 3 ist eine Sensoreinrichtung 35 für eine Temperaturerfassung vorgesehen, sodass die Temperatur des Reaktors 3 am Auslass 32 erfassbar ist. Die Temperatur ist durch Variation einer dem Reaktor 3 mittels des Brenners 4 und/oder elektrisch zugeführten thermischen Energie auf ein Bereich von ca. 500°C bis 800°C regelbar.

Durch Zufuhr des den Reaktor 3 verlassenden Gasgemischs 2 zu dem Verdampfer 5 wird die thermische Energie des in dem Reaktor 3 erzeugten Gasgemischs 2 für die Verdampfung des flüssig bereitgestellten Ammoniaks 1 in dem Verdampfer 5 genutzt. Das verdampfte Ammoniak 1 wird dem Reaktor 3 zugeführt. So bleibt die für die Verdampfung zugeführte thermische Energie für die nachfolgende partielle Umwandlung des Ammoniaks 1 nahezu erhalten.

## Patentansprüche

1. Vorrichtung zur Verdampfung von Ammoniak (1) und zur partiellen Umwandlung von Ammoniak in ein brennbares, wasserstoffhaltiges Gasgemisch (2) mit einem Ammoniak-Anteil, umfassend einen Reaktor (3), wobei der Reaktor eingerichtet ist, um Ammoniak (1) zumindest teilweise in Wasserstoff und Stickstoff zur Erzeugung des Gasgemischs (2) aufzuspalten, einen Brenner (4) mit einer Brennkammer (40) und einen Verdampfer (5), wobei ein als Ausgangsstoff flüssig bereitgestelltes Ammoniak (1) über einen ersten Einlass (51) dem Verdampfer (5) für eine Verdampfung zuführbar ist und in dem Verdampfer (5) verdampftes Ammoniak an einem ersten Auslass (52) des Verdampfers (5) gasförmig abführbar ist,
**dadurch gekennzeichnet,**
**dass** der Reaktor (3) einen mit dem ersten Auslass (52) des Verdampfers (5) verbundenen Einlass (31), einen Auslass (32) für das Gasgemisch (2) und eine Trennwand (33) zu der Brennkammer (40), um das Ammoniak (1) in dem Reaktor (3) mittels des Brenners (4) indirekt zu erwärmen, aufweist, und
**dass** der Auslass (32) des Reaktors (3) mit einem zweiten Einlass (53) des Verdampfers (5) verbunden ist, um das flüssig zugeführte Ammoniak (1) mittels des aus dem Reaktor (3) abströmenden Gasgemischs (2) indirekt für die Verdampfung zu erwärmen.

2. Vorrichtung nach Anspruch 1, **dadurch gekennzeichnet, dass** die Trennwand (33) rohrförmig ist, wobei eine Reaktorkammer (34) des Reaktors (3) um die rohrförmige Trennwand (33) angeordnet ist.

3. Vorrichtung nach Anspruch 1 oder 2, **dadurch gekennzeichnet, dass** der Verdampfer (5) einen den Reaktor (3) umgebenden Ringkanal (55) und eine in dem Ringkanal (55) angeordnete Rohrwendel (56) aufweist, wobei flüssiges Ammoniak über den ersten Einlass (51) der Rohrwendel (56) für die Verdampfung zuführbar ist, wobei vorzugsweise zwischen dem Reaktor (3) und dem Ringkanal (55) eine Isolierung (6) vorgesehen ist, wobei die Isolierung (6) so bemessen ist, dass ein verbleibender Wandverlust für die Verdampfung des Ammoniaks in der Rohrwendel (56) nutzbar ist.

4. Vorrichtung nach Anspruch 1, 2 oder 3, **dadurch gekennzeichnet, dass** im Bereich des Auslasses (32) des Reaktors (3) ein Sensoreinrichtung (35) zur Erfassung einer Temperatur vorgesehen ist, und die Vorrichtung (100) Stelleinrichtungen (20, 60, 80, 90) umfasst, um die Temperatur durch Variation einer dem Reaktor (3) zugeführten thermischen Energie auf ein Bereich von ca. 500°C bis 800°C zu regeln.

5. Vorrichtung nach einem der Ansprüche 1 bis 4, **dadurch gekennzeichnet, dass** der Brenner (4) eine Gaszufuhr (41) aufweist, wobei mittels der Gaszufuhr (41) dem Brenner (4) wahlweise das aus dem Verdampfer (5) abströmende Gasgemisch (2) und/oder ein alternatives brennbares Gas (6) zuführbar ist und/oder dass eine elektrische Heizeinrichtung (9), insbesondere eine in der Brennkammer (40) angeordnete Heizspirale für eine Erwärmung des Reaktors (3) vorgesehen ist.

6. Vorrichtung nach einem der Ansprüche 1 bis 5, **dadurch gekennzeichnet, dass** der Brenner (4) in einem Verfahren für eine flammenlose Oxidation betreibbar ist.

7. Vorrichtung nach einem der Ansprüche 1 bis 6, **dadurch gekennzeichnet, dass** der Brenner (4) einen Wärmetauscher (7) für eine indirekte Erwärmung einer zugeführten Luft (8) mittels Abgas (45) aufweist, vorzugsweise einen Flachrohr-Wärmetauscher.

8. Vorrichtung nach einem der Ansprüche 1 bis 7, **dadurch gekennzeichnet, dass** ein Verdichter (11) zum Verdichten des flüssig bereitgestellten Ammoniaks (1) stromaufwärts des Verdampfers (5) vorgesehen ist, sodass das Gasgemisch (2) mit Überdruck erzeugbar ist.

9. Verfahren zur Verdampfung von Ammoniak (1) und zur partiellen Umwandlung von Ammoniak mittels eines Reaktors (3) in ein brennbares, wasserstoffhaltiges Gasgemisch (2) mit einem Ammoniak-Anteil, wobei in dem Reaktor (3) Ammoniak (1) zumindest teilweise in Wasserstoff und Stickstoff zur Erzeugung des Gasgemischs (2) aufgespalten wird, wobei ein als Ausgangsstoff flüssig zugeführtes Ammoniak (1) stromaufwärts des Reaktors (3) über einen ersten Einlass (51) einem Verdampfer (5) für eine Verdampfung zugeführt und verdampftes Ammoniak (1) aus dem Verdampfer (5) über einen ersten Auslass (52) abgeführt wird,
**dadurch gekennzeichnet,**
**dass** über den ersten Auslass des Verdampfers (5) abgeführtes verdampftes Ammoniak (1) dem Reaktor (3) zugeführt wird, wobei dem Reaktor (3) indirekt Wärme über eine Trennwand (33) zu einer Brennkammer (40) eines Brenners (4) zugeführt wird, um das Ammoniak (1) in dem Reaktor (3) mittels des Brenners (4) indirekt zu erwärmen, und
**dass** ein über einen Auslass (32) des Reaktors (3) abgeführtes Gasgemisch (2) einem zweiten Einlass (53) des Verdampfers (5) zugeführt wird, um das flüssig zugeführte Ammoniak (1) mittels des aus dem Reaktor (3) abströmenden Gasgemischs (2) indirekt für die Verdampfung zu erwärmen.

10. Verfahren nach Anspruch 9, **dadurch gekennzeichnet, dass** der Verdampfer (5) einen den Reaktor (3) umgebenden Ringkanal (55) und eine in dem Ringkanal (55) angeordnete Rohrwendel (56) aufweist, wobei flüssiges Ammoniak über den ersten Einlass (51) der Rohrwendel (56) für die Verdampfung zugeführt wird.

11. Verfahren nach Anspruch 9 oder 10, **dadurch gekennzeichnet, dass** eine Temperatur an dem Auslass (32) des Reaktors (3) mittels einer Sensoreinrichtung (35) erfasst wird, und die Temperatur durch Variation einer dem Reaktor (3) zugeführten thermischen Energie auf ein Bereich von ca. 500°C bis 800°C geregelt wird.

12. Verfahren nach einem der Ansprüche 9 bis 11, **dadurch gekennzeichnet, dass** über eine Gaszufuhr dem Brenner (4) wahlweise das aus dem Verdampfer (5) abströmende Gasgemisch (2) oder ein alternatives brennbares Gases zugeführt wird, wobei vorzugsweise für einen autarken Betrieb dem Brenner (4) ca. 10 % des erzeugten Gasgemischs zugeführt wird und/oder dass der Reaktor (3) temporär mittels einer elektrischen Heizeinrichtung erwärmt wird.

13. Verfahren nach einem der Ansprüche 9 bis 12, **dadurch gekennzeichnet, dass** der Brenner (4) in einem Verfahren für eine flammenlose Oxidation betrieben wird.

14. Verfahren nach einem der Ansprüche 9 bis 13, **dadurch gekennzeichnet, dass** dem Brenner (4) zugeführte Luft (8) indirekt in einem Wärmetauscher (7) mittels Abgas des Brenners (4) erwärmt werden, vorzugsweise in einem Flachrohr-Wärmetauscher.

15. Verfahren nach einem der Ansprüche 9 bis 14, **dadurch gekennzeichnet, dass** das flüssig bereitgestellte Ammoniak (1) stromaufwärts des Verdampfers (5) in einem Verdichter (11) verdichtet wird, sodass das Gasgemisch (2) mit Überdruck erzeugt wird.
